# EUROPÄISCHE PATENTSCHRIFT

(11) **EP 0 820 006 B1**
(45) Veröffentlichungstag und Bekanntmachung des Hinweises auf die Patenterteilung: **19.09.2007**
(21) Anmeldenummer: 97202203.2
(22) Anmeldetag: 14.07.1997
(51) Int. Cl.: G06F 9/30, G06F 9/318

(54) **Signalprozessor**
Signal processor
Processeur de signaux

(30) Priorität: 19.07.1996 DE 19629130
(43) Veröffentlichungstag der Anmeldung: 21.01.1998
(73) Patentinhaber: Adelante Technologies B.V., 5652 AH Eindhoven (NL)
(72) Erfinder: Bauer, Harald, Dipl.-Ing., Röntgenstrasse 24, 22335 Hamburg (DE); Kempf, Peter, Dr., Röntgenstrasse 24, 22335 Hamburg (DE); Lorenz, Dietmar, Dipl.-Ing., Röntgenstrasse 24, 22335 Hamburg (DE); Meyer, Peter, Dr., Röntgenstrasse 24, 22335 Hamburg (DE)
(74) Vertreter: Pennings, Johannes

(56) Entgegenhaltungen:
- EP-A- 0 324 308
- DE-A- 4 026 871
- "DESIGNING FLEXIBILITY INTO HARDWIRED LOGIC" IBM TECHNICAL DISCLOSURE BULLETIN, Bd. 37, Nr. 3, 1. März 1994, Seiten 321-324, XP000441489
- HALFHILL T R: "AMD VS. SUPERMAN" BYTE, Bd. 19, Nr. 11, 1. November 1994, Seite 95/96, 98, 100, 102, 104 XP000476573
- PATENT ABSTRACTS OF JAPAN vol. 095, no. 010, 30. November 1995 & JP 07 168714 A (HITACHI LTD), 4. Juli 1995 & US 5 638 524 A (KIUCHI ATSUSHI ET AL) 10. Juli 1997

## Beschreibung

Die Erfindung betrifft einen Signalprozessor mit einem Programmspeicher zur Speicherung komprimierter Programmbefehlsworte und einem Decoder zur Decodierung der komprimierten Programmbefehlsworte, die in der decodierten Form zur Steuerung von Funktionen des Signalprozessors vorgesehen sind,
wobei die Decodierfunktionen des Decoders teilweise fest und teilweise programmierbar sind. Ein solcher Signal prozessor ist aus dem Dokument "Designing Flexibility into Hardwired Logic; IBM Technical Disclosure Bulletin, Bd.37,Nr. 3, 1.3.1994, Seiten 321-324, bekannt.

Digitale Signalprozessoren (DSP) sind spezielle Mikroprozessoren mit hoher Rechenleistung, deren Befehlssätze und Architekturen auf spezielle Anforderungen im Bereich der digitalen Signalverarbeitung abgestimmt sind und die insbesondere zur Umsetzung komplexer Algorithmen in Echtzeit dienen. Beispielsweise finden Signalprozessoren auf dem Gebiet des Mobilfunks nach der GSM-Norm Verwendung, wo sie in Mobilfunkendgeräten (Mobilstationen) oder Mobilfunkbasisstationen zur Umsetzung komplexer Sprachverarbeitungsalgorithmen dienen. Weitere Anwendungsgebiete sind beispielsweise Audio-, Video-, Medizin- und Kraftfahrzeugtechnik.

Übliche Signalprozessoren weisen einen Programmspeicher auf, in dem in komprimierter Form (d.h. codierter Form) Programmbefehle abgelegt sind, deren Aufruf zur parallelen Ausführung unterschiedlicher Signalverarbeitungsoperationen führt, z.B. die gleichzeitige Ausführung von zwei Datentransfers über zwei verschiedene Datenbusse, zwei Adreßberechnungsoperationen, einer Arithmetik-/Logik-Operation und einer Multiplikation. Beispiele für übliche Signalprozessoren sind der Philips PCF 5083 (KISS), der AT&T DSP 16xx und der Texas Instruments TMS 320. Die Programmbefehle sind bei diesen Signalprozessoren als 16-Bit-Worte im Programmspeicher abgelegt. Bei einer Decodierung (Dekompression) mittels eines Decoders werden die komprimierten 16-Bit-Programmbefehlsworte in Programmbefehlsworte mit einer größeren Wortbreite, die von der Komplexität des verwendeten Signalpro-zessors abhängt, umgesetzt (expandiert). Eine typische Wortbreite für die expandierten Programmbefehlsworte liegt im Bereich zwischen 32 und 128 Bit. Durch einen Aufruf von Programmbefehlen während eines Programmablaufs wird eine parallele Signalverarbeitung realisiert, wobei die einzelnen Bits der decodierten Programmbefehlsworte an entsprechende Steuerleitungen des Signalprozessors angelegt werden. Die Speicherung der Programmbefehle mittels komprimierter Programmbefehlsworte führt gegenüber einer Speicherung in nicht komprimierter Form zu einer Verringerung des Speicherplatzbedarfs und ist möglich, weil die Anzahl der verschiedenen theoretisch möglichen Programmbefehlsworte entsprechend begrenzt wird.

Die Decodierung von Programmbefehlsworten erfolgt bei derartigen Signalprozessoren mittels eines festverdrahteten Decoders, der die Decodierung mittels logischer Operationen ausführt. Aufgrund der Komprimierung der Programmbefehlsworte ist im Vergleich mit dem theoretischen Maximum von verschiedenen Programmbefehlsworten nur eine entsprechend reduzierte Anzahl verschiedener komprimierter Programmbefehlsworte im Programmspeicher kodierbar. Dies führt im Zusammenhang mit der Verwendung eines festverdrahteten Decoders zu einem eingeschränkten Programmbefehlssatz (eingeschränkte parallele Signalverarbeitung). Im oben genannten Beispiel sind bei komprimierten Programmbefehlsworten mit 16 Bit nur 2¹⁶ unterschiedliche Programmbefehlsworte bzw. Programmbefehle möglich. Theoretisch wären 2³² ... 2¹²⁸ verschiedene Programmbefehlsworte denkbar. Weitere mit einer anderen Kombination unterschiedlicher Signalverarbeitungsoperationen verbundene Programmbefehle, die aufgrund der gegebenen Signalprozessorarchitekturen durchaus möglich wären, können nicht zur Programmierung des Signalprozessors verwendet werden. Bei speziellen rechenintensiven Anwendungen, z.B. bei der Umsetzung des "Half-Rate-Codec" oder des "Enhanced-Full-Rate-Codec" im Bereich des Mobilfunks (GSM), reicht der vorgegebene Standard-Befehlssatz der oben angeführten Signalprozessoren nicht zur effektiven Umsetzung der entsprechenden komplexen Signalverarbeitungsalgorithmen in Echtzeit aus.

Aufgabe der Erfindung ist es nun, einen Signalprozessor zu schaffen, der gegenüber bisher bekannen Signalprozessoren der eingangs genannten Art eine optimale Anpassung an den jeweiligen Anwendungsbereich ermöglicht.

Die Aufgabe wird durch die Merkmale des unabhängigen Anspruchs 1 gelöst.

Auf diese Weise wird bei unveränderter Gesamtzahl möglicher Programmbefehle eine Modifizierung des Programmbefehlssatzes ermöglicht. Der Vorteil des verringerten Programmspeicherbedarf aufgrund der durch die Komprimierung verringerten erforderlichen Wortbreite für einen Programmbefehl bleibt erhalten. Zusätzlich kann nun durch Änderung oder Ersetzung bestimmter Programmbefehle mittels Änderung der programmierbaren Decodierfunktionen des Decoders eine Anpassung des Programmbefehlssatzes erfolgen, so daß der Signalprozessor für spezielle sehr rechenintensive Anwendungen optimal einsetzbar wird. Darüberhinaus lassen sich die programmierbaren Decodierfunktionen auch während des Betriebs des Signalprozessors bzw. eines Geräts, in dem der Signalprozessor gerade eingesetzt wird, durch Laden von neuen Decodiertabellen, die die vorher geladenen Decodiertabellen ersetzen, modifizieren, um eine Anpassung an verschiedene Betriebszustände zu ermöglichen. Durch die beschriebene Anpassung des Programmbefehlssatzes läßt sich der Datendurchsatz des Signalprozessors erhöhen, was in vorteilhafter Weise auch zu einer Reduktion des Stromverbrauchs führt. Dies ist insbesondere im Bereich der Anwendung in Mobilfunkendgeräten ein wichtiger Vorteil.

Zur Durchführung der programmierbaren Decodierfunktionen des Decoders ist vorzugsweise vorgesehen, eine Adressierung von Speicherzellen eines Speichers des Signalprozessors, in denen decodierte Programmbefehlsworte abgelegt sind, vorzunehmen. Auf diese Weise sind Decodiertabellen umsetzbar. Andere decodierte Programmbefehlsworte erhält man mit Hilfe des festen (festverdrahteten) Teils des Decoders. Der verwendete programmierbare Decoder ist einfach, effektiv und variabel. Der zur Speicherung der Programmbefehle in ihrer decodierten (dekomprimierten) Form dienende Speicher wird vorzugsweise als RAM oder als ROM ausgeführt. Die Ausführung des Speichers als RAM wird aufgrund der hohen Flexibilität insbesondere bei noch in der Entwicklung befindlichen oder in geringen Stückzahlen produzierten Signalprozessoren verwendet. Darüberhinaus bietet die Ausführung des Speichers als RAM den Vorteil, daß eine Änderung des Signalprozessorbefehlssatzes auch während des Betriebs des Signalprozessors möglich ist. Die Ausführung als ROM wird vorzugsweise in in Massenproduktion auf den Markt kommenden Signalprozessoren verwendet, um eine Kostenreduktion gegenüber der Verwendung von RAM-Speichern zu erreichen.

In einer Ausgestaltung der Erfindung ist vorgesehen, daß ein vom Programmspeicher geliefertes komprimiertes Programmbefehlswort, zu dessen Decodierung eine programmierbare Decodierfunktion des Decoders vorgesehen ist, eine erste Anzahl Bits zur Bestimmung einer Programmbefehlskategorie und eine zweite Anzahl Bits zur Bestimmung der Adresse einer Speicherzelle des Speichers enthält. Mit Hilfe der ersten Anzahl Bits werden die unterschiedlichen Programmbefehle/Programmbefehlskategorien identifiziert. Diese Bits legen auch fest, ob eine Decodierung (Dekomprimierung) mit Hilfe des festen oder des programmierbaren Teils des Decoders erfolgt. Die zweite Anzahl Bits ist zusätzlich zur Umsetzung der jeweiligen Programmbefehle erforderlich und definiert die Programmbefehle in ihren Einzelheiten bezüglich der Erzeugung entsprechender an Steuerleitungen anzulegender Bits für die Generierung durchzuführender Signalverarbeitungsschritte. Beim programmierbaren Decoderteil sind diese Bits sind in den Speicherzellen des genannten Speichers abgelegt und werden entsprechend der Adressierung durch die zweite Anzahl Bits ausgelesen und an die zugehörigen Steuerleitungen des Signalprozessors angelegt.

Die Erfindung bezieht sich auch auf ein Mobilfunkendgerät und eine Mobilfunkbasisstation mit einem erfindungsgemäßen Signalprozessor, der bei diesen Anwendungen zur digitalen Signalverarbeitung dient, z. B. zur Umsetzung von Sprachverarbeitungsalgorithmen, zur Kanalcodierung/-decodierung und/oder zur Umsetzung von Equalizerfunktionen (Entzerrerfunktionen). Weiterhin ist es vorteilhaft, den Signalprozessor zur digitalen Signalverarbeitung auch in anderen Geräten zu verwenden, z.B. in Rundfunkgeräten für den digitalen Rundfunk, ISDN-Endgeräten und DECT-Systemen ("Digital European Cordless Telephone").

Ein Ausführungsbeispiel der Erfindung wird nachstehend anhand der Zeichnungen näher erläutert. Es zeigen:
- Fig. 1: eine die Erfindung beschreibende Signalprozessorstruktur und
- Fig. 2: den Aufbau eines komprimierten Programmbefehlswortes.

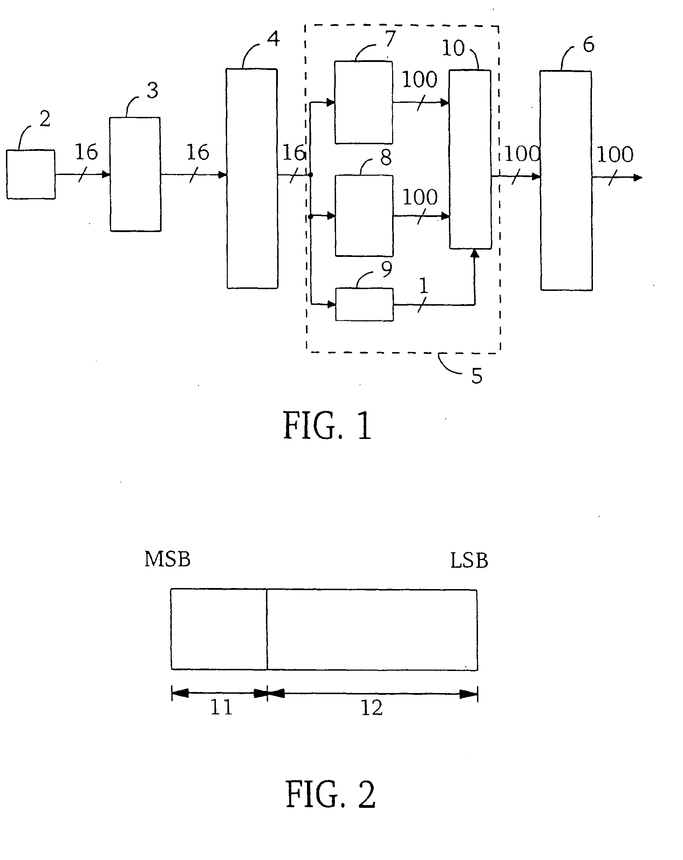

Die in Fig. 1 dargestellte Signalprozessorstruktur, die die nicht erfindungswesentlichen Teile des zugehörigen Signalprozessors aus Gründen der Übersichtlichkeit nicht zeigt, enthält einen Programmzähler, der mittels 16 Bit breiter Steuersignale einen Programmspeicher 3 ansteuert. Die zur Umsetzung eines Programmes erforderlichen Programmbefehle sind mittels codierter (d.h. komprimierter) Programmbefehlsworte im Programmspeicher 3 gespeichert. Im vorliegenden Fall bestehen die komprimierten Programmbefehlsworte aus jeweils 16 Bit, die wie nachfolgend beschrieben hier in 100 Bit breite Programmbefehlsworte decodiert (d.h. dekomprimiert) werden. Die übliche Breite der decodierten Programmbefehlsworte liegt im Bereich zwischen 32 und 128 Bits.

Beim Aufruf eines Programmbefehls wird zunächst das entsprechende im Programmspeicher 3 abgelegte komprimierte Programmbefehlswort ausgelesen und in einem Register 4 zwischengespeichert. Ein solches Programmbefehlswort wird anschließend einem Decoder 5 zugeführt, der das komprimierte Programmbefehlswort mit 16 Bit in ein decodiertes Programmbefehlswort mit 100 Bit umsetzt. Das vom Decoder 5 erzeugte 100-Bit-Programmbefehlswort wird nach einer Zwischenspeicherung in einem Register 6 an Steuerleitungen des Signalprozessors angelegt, um eine zugehörige Signalverarbeitungsfunktion des Signalprozessors zu steuern. Im vorliegenden Fall enthält der Signalprozessor 100 parallele Steuerleitungen, an die parallel die 100 Bit eines im Register 6 zwischengespeicherten Programmbefehlswortes angelegt werden.

Der Decoder 5 enthält einen ersten Decoderteil 7, einen zweiten Decoderteil 8, eine Funktionseinheit 9 zur Detektierung von Programmbefehlskategorien und einen Multiplexer 10. Die im Register 4 zwischengespeicherten komprimierten 16-Bit-Programmbefehlswörter werden parallel dem ersten und zweiten Decoderteil und der Funktionseinheit 9 zugeführt.

Ein solches Programmbefehlswort hat die in Fig. 2 dargestellte Form. Es besteht aus einem ersten Feld 11 und einem zweiten Feld 12. Die zum ersten Feld 11 gehörenden Bits beschreiben die jeweilige Programmbefehlskategorie, d.h. das Format eines Programmbefehls. Das zweite Feld 12 enthält Bits zur genauen Festlegung der Einzelheiten des entsprechenden Programmbefehls. Wie später noch erläutert wird, können im zweiten Feld 12 auch Adressen stehen. Das erste Feld 11 enthält die höherwertigen Bits des Programmbefehlswortes mit dem MSB ("Most Significant Bit"). Das zweite Feld 12 enthält die übrigen niederwertigen Bits mit dem LSB ("Least Significant Bit"). Die Aufteilung der zur Verfügung stehenden Gesamtzahl Bits auf die beiden Felder 11 und 12 ist variabel und hängt von den einzelnen Programmbefehlskategorien ab.

Ein komprimiertes und vom Register 4 geliefertes Programmbefehlswort wird entweder von dem Decoderteil 7 oder dem Decoderteil 8 decodiert (dekomprimiert). Der Decoderteil 7 enthält eine fest verdrahtete Decodieranordnung, die mittels geeigneter logischer Operationen aus einem komprimierten 16-Bit-Programmbefehlswort ein 100-Bit-Programmbefehlswort erzeugt. Eine Decodierung eines vom Register 4 gelieferten komprimierten 16-Bit-Programmbefehlswortes kann aber auch mittels des Decodersteils 8 erfolgen. Dieses ist ein programmierbarer 100 Bit breiter Speicher, in dessen Speicherzellen die aus den komprimierten 16-Bit-Programmbefehlsworten zu erzeugenden dekomprimierten 100-Bit-Programmbefehlsworte abgelegt sind. Er ist im vorliegenden Beispiel als ROM ausgeführt. Jedoch ist insbesondere für Entwicklungszwecke eine Ausführung als RAM wegen der größeren Flexibilität vorteilhaft. Die Decodierung mit dem programmierbaren Decoderteil 8 erfolgt durch Adressierung der Speicherzellen mit dem zweite Feld 12 der komprimierten 16-Bit-Programmbefehlsworte und dem entsprechenden Auslesen des Speicherinhaltes der adressierten Speicherzellen. Welches der Decoderteile 7 oder 8 zur Decodierung herangezogen wird, ist durch das erste Feld 11 der jeweiligen komprimierten 16-Bit-Programmbefehlsworte (siehe Fig. 2) festgelegt. Welche Programmbefehlskategorien zu welchem Decoderteil gehören, wird a priori festgelegt, so daß im Betrieb des Signalprozessors eine entsprechende Zuordnung zum Decoderteil 7 oder zum Decoderteil 8 erfolgen kann.

Das programmierbare Decoderteil 8 dient im Gegensatz zum Decoderteil 7 zur Decodierung anwendungsspezifischer Programmbefehlsworte (auch ASI "Application Specific Instructions" genannt). Je nach Anwendungsfall läßt sich der Speicher 8 mit neuen Decodierdaten überschreiben, um so eine Änderung der Decodierfunktionen zu bewirken. Im Gegensatz dazu kann eine Änderung der mit Hilfe des fest verdrahteten Decoderteils 7 ausführbaren Decodierfunktionen nicht erfolgen. Mit Hilfe des Decoderteils 7 werden deshalb Decodierfunktionen realisiert, die zu Programmbefehlen gehören, die für viele unterschiedliche Anwendungsfälle vorgesehen und somit nicht anwendungsspezifisch sind.

Im hier vorliegenden Beispiel mit komprimierten 16 Bit enthaltenden Programmbefehlsworten sind maximal 2¹⁶ verschiedene Programmbefehle realisierbar. Unter der Annahme, daß N Programmbefehle mittels des Decoderteils 8 umgesetzt werden, dient das Decoderteil 7 zur Umsetzung von 2¹⁶ - N Standard-Programmbefehlen. Ein typischer Bereich für N ist gegeben durch 64 ≤ N ≤ 512. Jedoch hängt N stark von in Betracht kommenden Einsatzgebieten des Signalprozessors ab.

Da mit Hilfe des programmierbaren Decoderteils 8 speziell auf eine bestimmte Anwendung zugeschnittene Programmbefehle realisierbar sind, läßt sich aufgrund der auf diese Weise möglichen effektiveren parallelen Signalverarbeitung eine höhere Verarbeitungsgeschwindigkeit bzw. ein höherer Datendurchsatz des Signalprozessors erreichen, was gleichzeitig auch mit einer Verringerung des Stromverbrauchs verbunden ist. So lassen sich nun zur Verfügung stehende Standardoperationen (arithmetische Operationen, Datentransfers über die Datenbusse des Signalprozessors, Verzweigungsoperationen, etc.) in beliebiger Weise zu parallelen Programmbefehlen zusammenfassen, wobei jeder Programmbefehl ein paralleles Ausführen der durch ihn zusammengefaßten Standardoperationen bewirkt. Insbesondere bei der digitalen Signalverarbeitung im Bereich des Mobilfunks (Sprachverarbeitung, Kanalcodierung/-Decodierung, Equalizer-/Entzerrerfunktionen) ist der Einsatz eines solchen Signalprozessors aufgrund der sehr komplexen und spezifischen umzusetzenden Algorithmen vorteilhaft, an die ein erfindungsgemäßer Signalprozessor durch Anpassung seines Programmbefehlssatzes wie oben beschrieben anpaßbar ist. Der Einsatz eines solchen Signalprozessors in einer Mobilfunkbasisstation oder in einem Mobilfunkendgerät läßt sich beispielsweise aus der DE-A 43 44 157 entnehmen.

Die Funktionseinheit 9 stellt ebenfalls anhand des ersten Feldes 11 eines ihr zugeführten komprimierten 16-Bit-Programmbefehlswortes fest, welches Decoderteil 7 oder 8 die Decodierung durchführt. Die Funktionseinheit 9 generiert aufgrund dieser Auswertung ein 1-Bit-Steuersignal zur Steuerung des Multiplexers 10. Je nachdem, welcher der beiden möglichen Steuerzustände das von der Funktionseinheit 9 gelieferte Steuersignal aufweist, koppelt der Multiplexer 10 entweder die 100 Ausgänge des Decoderteils 7 oder die 100 Ausgänge des Decoderteils 8 mit den 100 Eingängen des Registers 6, um das jeweilige dekomprimierte Programmbefehlswort im Register 6 für eine spätere Verwendung als Steuersignal zur Signalverarbeitung zwischenzuspeichern.

Mit der beschriebenen Signalprozessorstruktur wird eine erhöhte Flexibilität des Signalprozessors sichergestellt. Aus der theoretisch möglichen Menge an 2¹⁰⁰ Programmbefehlen werden 2¹⁶ Programmbefehle umgesetzt. Ein Teil dieser umgesetzten Programmbefehle (N) ist vom jeweiligen Benutzer definierbar, der somit den Signalprozessor an sehr spezifische Anwendungen anpassen kann. Ein besonders hohes Maß an Flexibilität wird dadurch sichergestellt, daß selbst während des Betriebes eines den Signalprozessor verwendenden Gerätes eine Modifikation der durch den Decoder 5 erfaßten Programmbefehle möglich ist. Hierzu wird der als Speicher ausgeführte Decoderteil 8 einfach mit den neuen Decodierungsdaten überschrieben.

Der erfindungsgemäße Signalprozessor ist zur digitalen Signalverarbeitung auch in anderen Geräten einsetzbar, z.B. in Rundfunkgeräten für den digitalen Rundfunk, ISDN-Endgeräten und DECT-Systemen (nicht dargestellt).

## Patentansprüche

1. Signalprozessor mit einem Programmspeicher (3) zur Speicherung komprimierter Programmbefehlsworte (11,12) und einem Decoder (5) zur Decodierung der komprimierten Programmbefehlsworte, die in der decodierten Form zur Steuerung von Funktionen des Signalprozessors vorgesehen sind, wobei die Decodierfunktionen des Decoders (5) teilweise fest und teilweise programmierbar sind, **dadurch gekennzeichnet, daß** der Decoder (5) einen ersten Decoderteil (7), einen zweiten Decoderteil (8) und eine Funktionseinheit (9) enthält, der erste Decoderteil (7) eine fest verdrahtete Decodieranordnung enthält und der zweite Decoderteil (8) programmierbar ist, und die Funktionseinheit (9) anhand der komprimierten Programmbefehlsworte steuert, welches Decoderteil (7 oder 8) die Decodierung durchführt.

2. Signalprozessor nach Anspruch 1, **dadurch gekennzeichnet, daß** eine Adressierung von Speicherzellen eines Speichers (8) des Signalprozessors, in denen decodierte Programmbefehlsworte abgelegt sind, zur Durchführung der programmierbaren Decodierfunktionen des Decoders (5) vorgesehen ist.

3. Signalprozessor nach Anspruch 2, **dadurch gekennzeichnet, daß** der Speicher (8) als RAM ausgeführt ist.

4. Signalprozessor nach Anspruch 2, **dadurch gekennzeichnet, daß** der Speicher (8) als ROM ausgeführt ist.

5. Signalprozessor nach einem der Ansprüche 2 bis 4, **dadurch gekennzeichnet, daß** ein vom Programmspeicher (3) geliefertes komprimiertes Programmbefehlswort, zu dessen Decodierung eine programmierbare Decodierfunktion des Decoders (5) vorgesehen ist, eine erste Anzahl Bits (11) zur Bestimmung einer Programmbefehlskategorie und eine zweite Anzahl Bits (12) zur Bestimmung der Adresse einer Speicherzelle des Speichers (8) enthält.

6. Mobilfunkendgerät mit einem Signalprozessor nach einem der Ansprüche 1 bis 5 zur digitalen Signalverarbeitung.

7. Mobilfunkbasisstation mit einem Signalprozessor nach einem der Ansprüche 1 bis 5 zur digitalen Signalverarbeitung.

8. Rundfunkgerät für digitalen Rundfunk mit einem Signalprozessor nach einem der Ansprüche 1 bis 5 zur digitalen Signalverarbeitung.

9. ISDN-Endgerät mit einem Signalprozessor nach einem der Ansprüche 1 bis 5 zur digitalen Signalverarbeitung.

10. DECT-System mit einem Signalprozessor nach einem der Ansprüche 1 bis 5 zur digitalen Signalverarbeitung.

## Claims

1. A signal processor comprising a program memory (3) for storing compressed program instruction words (11, 12) and a decoder (5) for decoding the compressed program instruction words which are used in decoded form to control functions of the signal processor, wherein the decoding functions of the decoder are partly fixed and partly programmable, **characterized in that** the decoder (5) comprises a first decoder section (7), a second decoder section (8), and a function unit (9), **in that** the first decoder section (7) comprises a hardwired arrangement and the second decoder section (8) is programmable, and **in that** the function unit (9) controls on the basis of the compressed program instruction words which decoder section (7 or 8) is to carry out the decoding.

2. A signal processor as claimed in claim 1, **characterized in that** memory cells of a memory (8) of the signal processor, in which cells decoded program instruction words are stored, are addressed for executing the programmable decoding functions of the decoder (5).

3. A signal processor as claimed in claim 2, **characterized in that** the memory (8) is arranged as a RAM.

4. A signal processor as claimed in claim 2, **characterized in that** the memory (8) is arranged as a ROM.

5. A signal processor as claimed in one of the claims 2 to 4, **characterized in that** a compressed program instruction word provided by the program memory (3) contains a first number of bits (11) for determining a category of the program instruction, and a second number of bits (12) for determining the address of a memory cell of the memory (8), a programmable decoding function of the decoder (5) being provided for decoding the program instruction word.

6. A mobile radio terminal comprising a signal processor as claimed in one of the claims 1 to 5 for digital signal processing.

7. A radio base station comprising a signal processor as claimed in one of the claims 1 to 5 for digital signal processing.

8. A radio apparatus for digital radio comprising a signal processor as claimed in one of the claims 1 to 5 for digital signal processing.

9. An ISDN terminal comprising a signal processor as claimed in one of the claims 1 to 5 for digital signal processing.

10. A DECT system comprising a signal processor as claimed in one of the claims 1 to 5 for digital signal processing.

## Revendications

1. Processeur de signaux avec une mémoire de programme (3) destiné à enregistrer des mots d'instruction de programme comprimés (11, 12) et avec un décodeur (5) destiné à décoder des mots d'instruction de programme comprimés qui sont prévus dans la forme décodée pour commander des fonctions du processeur de signaux, moyennant quoi les fonctions de décodage du décodeur (5) sont en partie fixes et en partie programmables, **caractérisé en ce que** le décodeur (5) contient une première partie de décodeur (7), une deuxième partie de décodeur (8) et une unité fonctionnelle (9), la première partie de décodeur (7) contient un dispositif de décodage câblé à demeure et la deuxième partie de décodeur (8) est programmable, et l'unité fonctionnelle (9) commande à l'aide des mots d'instruction de programme comprimés quelle partie de décodeur (7 ou 8) effectue le décodage.

2. Processeur de signaux selon la revendication 1, **caractérisé en ce qu'**un adressage de cellules de mémoire d'une mémoire (8) du processeur de signaux, dans lesquelles sont déposés des mots d'instruction de programme décodés, est prévu pour l'exécution des fonctions de décodage programmables du décodeur (5).

3. Processeur de signaux selon la revendication 2, **caractérisé en ce que** la mémoire (8) est exécutée sous forme d'une RAM.

4. Processeur de signaux selon la revendication 2, **caractérisé en ce que** la mémoire (8) est exécutée sous forme d'une ROM.

5. Processeur de signaux selon une des revendications 2 à 4, **caractérisé en ce qu'**un mot d'instruction de programme comprimé délivré par la mémoire de programme (3), pour le décodage duquel il est prévu une fonction de décodage programmable du décodeurs (5), contient un premier nombre de bits (11) pour déterminer une catégorie d'instructions de programme et un deuxième nombre de bits (12) pour déterminer l'adresse d'une cellule de mémoire de la mémoire (8).

6. Appareil de radiocommunications mobiles avec un processeur de signaux selon l'une des revendications 1 à 5 destiné au traitement numérique de signaux.

7. Station de base de radiocommunications mobiles avec un processeur de signaux selon une des revendications 1 à 5 destiné au traitement numérique de signaux.

8. Appareil de radiocommunications pour les radiocommunications numériques avec un processeur de signaux selon une des revendications 1 à 5 destiné au traitement numérique de signaux.

9. Appareil terminal RNIS avec un processeur de signaux selon une des revendications 1 à 5 destiné au traitement numérique de signaux.

10. Système DECT avec un processeur de signaux selon une des revendications 1 à 5 destiné au traitement numérique de signaux.
